# EUROPEAN PATENT SPECIFICATION

(11) **EP 0 704 607 B1**
(45) Date of publication and mention of the grant of the patent: **31.10.2001**
(21) Application number: 95850152.0
(22) Date of filing: 31.08.1995
(51) Int. Cl.: F01N 3/28, B01J 35/06, B01D 53/88

(54) **A securing means of ceramic monoliths**
Befestigungsmittel eines keramischen Monoliths
Moyen de fixation d'une monolith en céramique

(30) Priority: 05.09.1994 SE 9402967
(43) Date of publication of application: 03.04.1996
(73) Proprietor: ABB FLÄKT AB, 120 86 Stockholm (SE)
(72) Inventor: Götmalm, Örjan, S-430 41 Kullavik (SE)
(74) Representative: Roth, Ernst Adolf Michael

(56) References cited:
- DE-A- 3 713 779
- US-A- 4 238 455
- US-A- 4 814 146

## Description

### FIELD OF THE INVENTION

The present invention refers to an apparatus for securing ceramic monolith blocks inside a catalytic reactor chamber, which blocks are located upon at least one essentially horizontal, grill-shaped support surface between an inlet to the reactor chamber and an outlet from said chamber.

### BACKGROUND OF THE INVENTION

Catalytic reactor chambers with ceramic monolith blocks are for example used within large combustion plants, in order to catalytically reduce the concentration of unhealthy and environmentally polluting contents in the exhausts. The monolithic blocks are provided with a large number of narrow channels extending through the respective blocks, in which channels the exhausts flow while they pass from the inlet of the reactor to its outlet.

At vertically mounted exhaust catalytic reactors for large diesel engines, the fragile ceramic catalytic material (often 150x150 mm in section and 200-300 mm high catalytic blocks, provided with protective collars of fibreglass fabric) must be prevented from vibrating freely, from wearing against its supporting surface or from creating gaps to the reactor wall or between themselves, so that the gas may leak past the catalytic blocks and thereby avoiding cleaning. This is achieved by arranging a system of springs and seals which press against the sides of the catalytic blocks at two adjacent sides for each supporting surface, and in this way making them stand steady without any gaps. For a number of reasons, these systems will be complicated, because they have to be tight, at the same time they are subjected to strong thermal loads. They also press very hard against the side of the blocks standing nearest to the spring apparatus, while the blocks which stand at the far end from the spring apparatus are only subjected to a small pressure. It may also be very difficult to reach these apparatuses from the outside, because the reactors are often mounted close to two or three walls.

This means that those ceramic blocks which are closest to the side surfaces which form support surfaces for the blocks will be subjected to much more wear than the blocks which are located adjacent the spring apparatuses.

### THE TECHNICAL PROBLEM

The purpose of the present invention is to provided an improved apparatus for securing monolithic blocks inside a catalytic reactor chamber.

### THE SOLUTION

For this purpose, according to the invention, the blocks are placed in groups, and pressure means are mounted between the groups, substantially in parallel with the support surface, said pressure means acting against the sides of the blocks.

Advantageous variants of the invention are described in the depending claims.

### DESCRIPTION OF THE DRAWINGS

The invention will be described hereinafter with reference to embodiments that are shown in the enclosed drawings, wherein
- Fig. 1: is a schematic vertical section through a reactor chamber,
- Fig. 2: is a corresponding horizontal section through the reactor chamber in Fig. 1, and
- Fig. 3: shows in transverse section, in a larger scale, the pressure means being a part of the invention.

### DESCRIPTION OF EMBODIMENTS

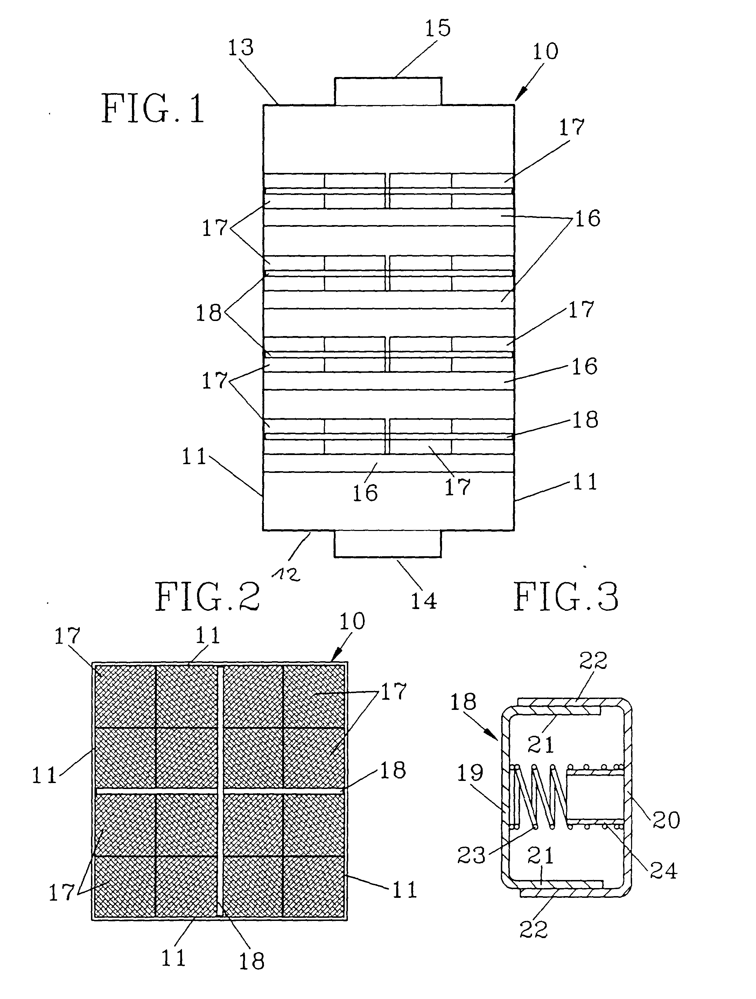

The reactor chamber 10 shown in Fig. 1 and 2 has an oblong shape with a quadratic section, and is installed vertically, e.g. in a vessel for cleaning of exhausts from one or more engines.

The inner of the chamber shielded from the surroundings by means of four in right angle to each other arranged side walls 11 and end walls 12, 13. The end wall 12 is provided with a centrally located inlet 14 and the end wall 13 is provided with a centrally located outlet 15. The side walls and the inlet and outlet are oriented symmetrically around a mutual longitudinal axis.

Internally, the chamber is in this embodiment provided with grill-like support surfaces 16 in four stairs. The support surfaces 16 comprise grilles which form support for honeycomb elements 17 of a ceramic material, which contribute to reduce for example contents of nitric oxide in the exhausts.

The monolithic blocks are divided into four equal groups by means of a cruciform, substantially in the horizontal plane adjacent the centre of the chamber mounted pressure means 18, which acts in said plane and presses the groups of blocks in the direction towards the respective chamber corner.

As Fig. 3 shows, the pressure means 18 comprises two U-shaped rails 19, 20, the side flanges 21, 22 of which are turned towards each other encompassing one or more spring means 23. The rail 19 is telescopically movable with its side flanges 21 supported between the side flanges 22 of the other rail 20.

The spring means 23 for example comprise screw springs which are held in place by means of tabs 24. Alternatively, blade springs may be used. The spring means may be secured in compressed condition while the pressure means are inserted between the blocks in the chamber, e.g. by means of a pin. Then the pin can be removed, so that the spring means are set into function.

The pressure means is preferably vertically movable between the blocks 17. By means of this movability, the pressure means react upon an increasing pressure drop within the chamber, which usually is caused by clogging up of the block channels. The movement of the pressure means may one or more passages past the block so that the pressure drop over the blocks is reduced. This condition should certainly be avoided as far as possible, but it could for example occur in case of engine trouble.

The invention is not limited to the above described embodiment, instead more variants are conceivable within the scoop of the following claims. For example, the reactor chamber may have another shape than four-sided, e.g. round. The pressure means 18 may be composed of two or more sections, which together form the arms of a cross. At a wide support surface, the blocks may be divided into several groups, between which pressure means may be located.

## Claims

1. An apparatus for securing ceramic monolith blocks (17) inside a catalytic reactor chamber (10), which blocks (17) are located upon at least one essentially horizontal, grill-shaped support surface (16) between an inlet (12) to the reactor chamber (10) and an outlet (13) from said chamber, which blocks (17) are placed in groups, and pressure means (18) are mounted between the groups, substantially in parallel with the support surface (16), said pressure means acting against the sides of the blocks,
**characterized in that** the pressure means (18) comprise two or more U-formed rails (19, 20), the side flanges (21, 22) of which are turned towards each other and encloses one or more spring means (23, and that one of the rails (19) is telescopically movable with its side flanges (21) supported between the side flanges (22) of the other rail (20).

2. An apparatus according to claim 1,
**characterized in that** the pressure means (18) forms a gas seal between the sides of the blocks and are vertically movable between these sides.

3. An apparatus according to claim 1 or 2,
**characterized in that** the pressure means (18) comprise two or more sections.

4. An apparatus according to claim 4,
**characterized in that** the spring means (23) comprise mechanical springs.

## Patentansprüche

1. Vorrichtung für das feste Anbringen monolithischer Keramikblöcke (17) im Inneren einer katalytischen Reaktorkammer (10), wobei die Blöcke (17) auf zumindest einer im wesentlichen horizontalen gitterförmigen Auflagefläche (16) zwischen einem Einlaß (12) in die Reaktorkammer (10) und einem Auslaß (13) aus der Kammer befindlich sind, wobei die Blöcke (17) in Gruppen angeordnet sind und Druckmittel (18) zwischen den Gruppen angebracht sind, im wesentlichen parallel zu der Auflagefläche (16), wobei die Druckmittel auf die Seiten der Blöcke einwirken,
**dadurch gekennzeichnet, daß** die Druckmittel (18) zwei oder mehr U-förmige Schienen (19, 20) umfassen, deren seitliche Flansche (21, 22) einander zugewandt sind, und ein oder mehrere Federmittel (23) einschließen und daß eine der Schienen (19) teleskopisch beweglich ist, wobei ihre seitlichen Flansche (21) zwischen den seitlichen Flanschen (22) der anderen Schiene (20) gehalten werden.

2. Vorrichtung nach Anspruch 1,
dadurch **gekennzeichne**t, daß die Druckmittel (18) eine Gasdichtung zwischen den Seiten der Blöcke bilden und zwischen diesen Seiten vertikal beweglich sind.

3. Vorrichtung nach Anspruch 1 oder 2,
**dadurch gekennzeichnet, daß** die Druckmittel (18) zwei oder mehr Abschnitte umfassen.

4. Vorrichtung nach Anspruch 4,
**dadurch gekennzeichnet, daß** die Federmittel (23) mechanische Federn umfassen.

## Revendications

1. Dispositif de fixation de blocs monolithes de céramique (17) à l'intérieur d'une chambre (10) de réacteur catalytique, lesquels blocs (17) sont placés sur au moins une surface (16) de support en forme de grille essentiellement horizontale, entre une entrée (12) pour la chambre (10) du réacteur et une sortie (13) de ladite chambre, lesquels blocs (17) sont placés en groupes, et des moyens de pression (18) étant montés entre les groupes, substantiellement de manière parallèle à la surface (16) de support, lesdits moyens de pression agissant contre les côtés des blocs,
***caractérisé en ce que*** les moyens de pression (18) comprennent deux rails en forme de U ou plus (19, 20), dont les ailes latérales (21, 22) sont orientées l'une vers l'autre et emprisonnent un ou plusieurs moyens de ressort (23), et ***en ce que*** l'un des rails (19) est mobile télescopiquement avec ses ailes latérales (21) reçues entre les ailes latérales (22) de l'autre rail (20).

2. Dispositif selon la Revendication 1, ***caractérisé en ce que*** les moyens de pression (18) forment un joint étanche aux gaz entre les côtés des blocs et sont mobiles verticalement entre ces côtés.

3. Dispositif selon la Revendication 1 ou 2, ***caractérisé en ce que*** les moyens de pression (18) comprennent deux sections ou plus.

4. Dispositif selon la Revendication 4, ***caractérisé en ce que*** les moyens de ressort (23) comprennent des ressorts mécaniques.
